# EUROPÄISCHE PATENTSCHRIFT

(11) **EP 2 999 093 B1**
(45) Veröffentlichungstag und Bekanntmachung des Hinweises auf die Patenterteilung: **12.07.2017**
(21) Anmeldenummer: 15001473.6
(22) Anmeldetag: 15.05.2015
(51) Int. Cl.: H02K 5/173, H02K 5/167, H02K 7/116, F16H 1/36

(54) **ELEKTRISCHE MASCHINE**
ELECTRIC MACHINE
MACHINE ÉLECTRIQUE

(30) Priorität: 22.05.2014 DE 102014007550
(43) Veröffentlichungstag der Anmeldung: 23.03.2016
(73) Patentinhaber: AUDI AG, 85045 Ingolstadt (DE)
(72) Erfinder: Maiwald, Stefan, DE - 85055 Ingolstadt (DE)

(56) Entgegenhaltungen:
- EP-A1- 1 077 522
- DE-A1-102012 102 798
- US-A1- 2010 320 849

## Beschreibung

Die Erfindung betrifft eine elektrische Maschine.

Ein Elektromotor umfasst als Komponenten in der Regel einen Stator und einen Rotor, der sich relativ zu dem Stator drehen kann. Dabei weist eine der beiden Komponenten Permanentmagneten und die andere Komponente Spulen auf, durch die elektrischer Strom zu leiten ist, wodurch mit den Spulen Magnetfelder erzeugt werden, aufgrund deren Wechselwirkung mit Magnetfeldern der Permanentmagneten der Rotor relativ zu dem Stator in Rotation versetzt wird.

Die Druckschrift DE 10 2012 102 798 A1 beschreibt eine Elektromaschine, die einen Stator und einen Rotor aufweist. Dabei ist der Rotor an einer Hohlwelle befestigt und mit dieser relativ zu dem Stator drehbar. Außerdem umfasst diese Elektromaschine ein Planetengetriebe mit einer Sonnenradwelle, die mit der Hohlwelle über Zahneingriffe verbunden ist. Dieses Planetengetriebe umfasst weiterhin Planetenräder, die an einer Abtriebswelle der Elektromaschine drehbar befestigt sind, wobei jeweils ein Planetenrad an der Abtriebswelle direkt angeordnet sowie relativ zu der Abtriebswelle drehbar ist. Dabei ist die Abtriebswelle zugleich als Planetenträger ausgeführt, auf dem die Planetenräder gelagert sind.

Vor diesem Hintergrund wird eine elektrische Maschine mit den Merkmalen von Patentanspruch 1 vorgestellt. Ausgestaltungen der elektrischen Maschine gehen aus den abhängigen Patentansprüchen hervor.

Die erfindungsgemäße elektrische Maschine weist ein Gehäuse, einen Stator, einen Rotor, ein Planetengetriebe und eine Welle auf, wobei der Stator, der Rotor, das Planetengetriebe und die Welle in dem Gehäuse angeordnet sind. Der Rotor und die Welle sind über das Planetengetriebe miteinander verbunden. Demnach ist der Rotor mit der Welle indirekt verbunden. Somit können sich der Rotor und die Welle mit unterschiedlichen Drehzahlen drehen.

Gemäß einer möglichen Ausgestaltung weist das Planetengetriebe ein Sonnenrad mit einer Außenverzahnung, mehrere Planetenräder mit jeweils einer Außenverzahnung, ein Hohlrad mit einer Innenverzahnung sowie einen Haupt-Planetenträger auf. Dabei sind der Rotor und das Sonnenrad miteinander verbunden und somit aneinander drehfest befestigt. Das Hohlrad ist an dem Gehäuse befestigt. Jeweils ein Planetenrad ist über eine Planetenradwelle an dem Haupt-Planetenträger drehbar befestigt. Der Haupt-Planetenträger ist mit der Welle verbunden, so dass der Haupt-Planetenträger und die Welle miteinander drehfest verbunden sind und gemeinsam gedreht werden können. Außenverzahnungen der Planetenräder greifen in die Außenverzahnung des Sonnenrads und in die Innenverzahnung des Hohlrads. Bei einem Betrieb der elektrischen Maschine wird eine Rotation des Rotors über das Sonnenrad und die Planetenräder auf den Haupt-Planetenträger und somit auf die Abtriebswelle übertragen.

Die elektrische Maschine ist als Elektromotor ausgebildet bzw. zu verwenden, wobei die Welle in diesem Fall als Abtriebswelle zu verwenden ist. Alternativ oder ergänzend ist die elektrische Maschine als Generator ausgebildet bzw. zu verwenden, wobei die Welle in diesem Fall als Antriebswelle zu verwenden ist.

Das vorgestellte Planetengetriebe kann für unterschiedliche Arten von elektrischen Maschinen, d. h. von Elektromotoren und/oder Generatoren, bei denen sich jeweils ein Rotor relativ zu einem Stator dreht, wobei der Rotor koaxial zu dem Stator angeordnet ist, vorgesehen sein. So kann eine derartige elektrische Maschine bspw. als Kollektormotor, Drehstrom-Kollektormotor, bürstenloser Gleichstrommotor (BLDC), Asynchronmotor, Drehstrom-Asynchronmotor, Synchronmotor oder Reluktanzmotor ausgebildet sein, wobei die voranstehend genannten Elektromotoren auch als Generatoren eingesetzt bzw. verwendet werden können.

Die vorgestellte elektrische Maschine umfasst demnach ein Planetengetriebe. Mindestens ein Rotorlager zwischen dem Rotor und der als Abtriebswelle oder Antriebswelle ausgebildeten Welle ist hier dazu ausgebildet, eine Funktion eines Differenzlagers zu übernehmen. In diesem Fall ist der drehbare Rotor der elektrischen Maschine über das Planetengetriebe mit der Welle der elektrischen Maschine indirekt verbunden. Durch diese Maßnahme können mit der elektrischen Maschine auch hohe Drehzahlen erreicht werden. Das Planetengetriebe umfasst separate Wellen, die als Planetenradwellen ausgebildet sind, und als Planetenradlager ausgebildete Lager, über die die Planetenradwellen der Planetenräder mit dem Planetenradträger drehbar verbunden sind. Demnach kann das Planetengetriebe als ein Vorgelege und somit Zusatzgetriebe der elektrischen Maschine bezeichnet werden.

Des weiteren umfasst die elektrische Maschine als Komponenten das Gehäuse, das in einer Variante als Gehäusetopf ausgebildet sein kann, den mit und/oder an dem Gehäuse befestigten Stator sowie den relativ zu dem Stator sowie dem Gehäuse drehbaren Rotor. Als weitere Komponenten der elektrischen Maschine sind die als Abtriebswelle oder Antriebswelle zu verwendende Welle und deren als Abtriebswellenlager oder Antriebswellenlager zu verwendendes Lager vorgesehen, über die die Welle in dem Gehäuse bzw. relativ zu dem Gehäuse drehbar gelagert ist.

Das Planetengetriebe als Komponente der elektrischen Maschine ist in das Gehäuse integriert. Der Rotor weist eine zylindrische Innenwandung auf und ist demnach innen hohl ausgebildet. Eine Rotorlagerung des Rotors weist das mindestens eine als Rotorlager ausgebildete Lager auf, das ebenso wie jeweils ein Abtriebswellenlager als radiales Gleitlager oder Wälzlager ausgebildet sein kann, wodurch der Rotor von der Abtriebswelle mechanisch bzw. drehmechanisch entkoppelt ist.

Ein Über- und/oder Untersetzungsverhältnis zwischen dem zentralen Sonnenrad, das mit der Welle drehfest verbunden ist, und den Planetenrädern hängt von einer Anzahl der Zähne an der Innenverzahnung des Hofilrads sowie von der Anzahl der Zähne an den Außenverzahnungen des Sonnenrads und jeweils eines Planetenrads ab und kann bspw. 1:4 betragen. In diesem Fall ergibt sich bei einer Drehfrequenz des Rotors bzw. bei einer Rotordrehzahl von 10.000 Umdrehungen pro Minute eine Drehfrequenz der Welle bzw. eine Antriebs- und/oder Abtriebsdrehzahl von 2.500 Umdrehungen pro Minute. Eine Differenzdrehzahl zwischen dem Rotor und der Welle an dem mindestens einen Rotorlager beträgt demnach 7.500 Umdrehungen pro Minute. Aufgrund der Eigenschaften des Planetengetriebes entstehen bei einem Betrieb der elektrischen Maschine, sofern die Innenverzahnung des Hohlrads und die Außenverzahnungen der Planetenräder zylindrisch bzw. gerade oder pfeilförmig ausgebildet sind, an dem mindestens einen Rotorlager weder Radialkräfte noch Axialkräfte, wodurch dieses klein, leicht und preiswert ausgeführt werden kann. Derartige Radialkräfte und/oder Axialkräfte ergeben sind nur dann, wenn die Innenverzahnung und die Außenverzahnungen kegelmantelförmig und somit jeweils als Schrägverzahnungen ausgebildet sind.

Die elektrische Maschine und das Planetengetriebe weisen hier nur eine gemeinsame Welle auf. Über die Differenzlagerung ist der Rotor von der Welle entkoppelt. Sämtliche Lager des Elektromotors, d. h. die Rotorlager, die Planetenradlager sowie die Wellenlager, können aus Metall und/oder Kunststoff und somit ggf. aus einem Verbundwerkstoff preisgünstig hergestellt sein. Die das Gehäuse durchquerende Welle kann mit konventionellen Motorlagern als Wellenlager an dem Gehäuse drehbar gelagert sein. Der Haupt-Planetenträger ist mit der Welle drehfest verbunden. Die Komponenten des Planetengetriebes, d. h. das Sonnenrad, die Planetenräder sowie das Hohlrad, können ebenfalls preisgünstig aus Metall und/oder Kunststoff bzw. einem Verbundwerkstoff hergestellt sein. Durch Integration des Planetengetriebes und der genannten Lager in das Gehäuse bzw. den Gehäusetopf können elektrische Maschinen unterschiedlicher Größen bereitgestellt werden.

Das Planetengetriebe, das auch als Rotationsgetriebe bezeichnet werden kann, kann in weiterer Ausgestaltung mehrstufig ausgebildet sein. In diesem Fall kann der Planetenträger als Teil einer ersten Stufe ebenfalls auf der Welle gelagert und mit dem Sonnenrad als Komponente der zweiten Stufe verbunden sein. Dabei ist die Welle mit dem Planetenträger verbunden.

In weiterer Ausgestaltung können externe Radialkräfte auf eine gesamte Länge der elektrische Maschine abgestützt werden, wodurch deren Lager nur geringfügig belastet werden, was für ein erstes, vorderes Wellenlager, das zu dem Planetengetriebe benachbart angeordnet ist, und vor allem für ein zweites, hinteres Wellenlager, das benachbart zu dem Rotor angeordnet ist, zutrifft. Die elektrische Maschine weist eine geringe Länge sowie eine geringes Gewicht auf und ist materialsparend bereitzustellen. Die Rotorlager sind prinzipiell kräftefrei auszubilden, wobei jeweils ein Rotorlager nur der Differenzdrehzahl zwischen dem Rotor und der Welle ausgesetzt ist. Dadurch können eine Geräuschentwicklung, ein Verschleiß und eine Verlustleistung verringert werden. Eine Geräuschdämmung ist durch Einbau von Stator, Rotor, Planetengetriebe und Welle in das als Gehäusetopf ausgebildete Gehäuse zu erreichen.

Weitere Vorteile und Ausgestaltungen der Erfindung ergeben sich aus der Beschreibung und der beiliegenden Zeichnung.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand einer Ausführungsform in der Zeichnung schematisch dargestellt und wird unter Bezugnahme auf die Zeichnung schematisch und ausführlich beschrieben.

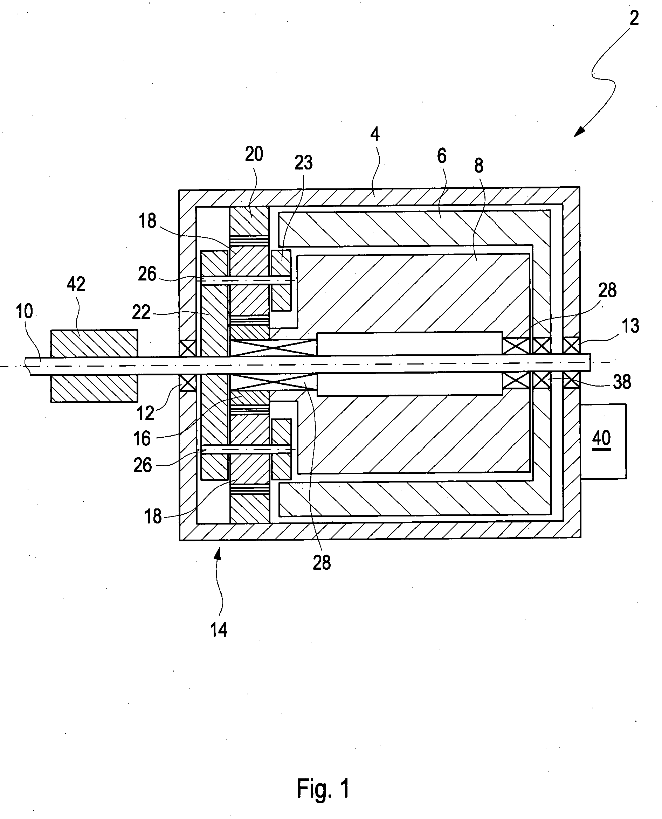

Figur 1 zeigt in schematischer Schnittdarstellung eine Ausführungsform einer erfindungsgemäßen elektrischen Maschine.

Die in Figur 1 in schematischer Schnittdarstellung gezeigte Ausführungsform der elektrischen Maschine 2 umfasst ein Gehäuse 4, in dem ein Stator 6 und ein Rotor 8 koaxial zu einer hier als Abtriebswelle ausgebildeten Welle 10 angeordnet sind, wobei hier der ortsfeste Stator 6 den drehbaren Rotor 8 koaxial umschließt. Die Welle 10 ist über zwei Wellenlager 12, 13, die hier an einer Vorderseite sowie an einer Rückseite des Gehäuses 4 befestigt sind, relativ zu dem Gehäuse 4 drehbar gelagert.

Außerdem umfasst die elektrische Maschine 2 ein in dem Gehäuse 4 angeordnetes Planetengetriebe 14 mit einem zentralen Sonnenrad 16, das mit dem Rotor 8 fest verbunden ist bzw. auch als Fortsatz des Rotors 8 bezeichnet werden kann. Das Planetengetriebe 14 umfasst zudem mehrere Planetenräder 18, von denen in Figur 1 lediglich zwei gezeigt sind, ein umlaufendes Hohlrad 20 sowie einen für alle Planetenräder 18 gemeinsamen Haupt-Planetenträger 22, der hier benachbart zu einem ersten Wellenlager 12 an einem ersten Ende des Gehäuses 4 angeordnet ist. Ein zweites Wellenlager 13 ist hier benachbart zu dem Rotor 8 an einem zweiten Ende des Gehäuses 4 angeordnet. Dabei sind die Planetenräder 18 als Zahnräder ausgebildet.

Das Sonnenrad 16 umfasst eine Außenverzahnung und das Hohlrad 20, das das Sonnenrad 16 und die Planetenräder 18 umschließt, eine Innenverzahnung. Jedes Planetenrad 18 ist hier über eine Planetenradwelle 26 mit dem Haupt-Planetenträger 22 drehbar verbunden. In der hier vorgestellten Ausführungsform ist jeweils ein erstes Ende einer Planetenradwelle 26 an dem Haupt-Planetenträger 22 befestigt. Jeweils ein entgegengesetztes zweites Ende einer Planetenradwelle 26 ist an einem zusätzlichen, zu dem Haupt-Planetenträger 22 komplementären Neben-Planetenträger 23 befestigt. Demnach ist hierbei jeweils ein Planetenrad 18 zwischen dem Haupt-Planetenträger 22 und dem Neben-Planetenträger 23 um die jeweilige Planetenradwelle 26 drehbar angeordnet.

Weiterhin ist der Haupt-Planetenträger 22 mit der Welle 10 verbunden bzw. an dieser befestigt. Das Hohlrad 20 ist hier mit dem Gehäuse 4 verbunden bzw. daran befestigt. Dagegen weist der Rotor 8 hier zwei Rotorlager 28 auf, die die Welle 10 umschließen und über die der Rotor 8 von der Welle 10 drehmechanisch entkoppelt ist.

Zudem weist der Rotor 8 in der beschriebenen Ausführungsform mehrere nicht weiter dargestellte Permanentmagneten auf, die an den Rotorlagern 28 befestigt sind und diese umschließen. Der Stator 6 umfasst hier nicht weiter dargestellte Wicklungen bzw. Spulen.

Ferner zeigt Figur 1 ein Statorlager 38, über das der Stator 6 von der Welle 10 entkoppelt ist, ein Kontrollgerät 40 zum Kontrollieren eines Betriebs der elektrischen Maschine 2 und ein außerhalb des Gehäuses 4 angeordnetes Rad 42, das an der Welle 10 befestigt und weiterhin mit einem hier nicht dargestellten Bauelement zu verbinden ist, das von der elektrischen Maschine 2, sofern sie als Elektromotor verwendet wird, angetrieben werden kann.

Bei einem Betrieb der elektrischen Maschine 2 wird durch die Spulen des Stators 6 elektrischer Strom geleitet, wodurch ein Magnetfeld erzeugt wird, das mit Magnetfeldern der Permanentmagneten des Rotors 8 zusammenwirkt, wodurch der Rotor 8 und das damit verbundene Sonnenrad 16 in Rotation versetzt werden. Über die Außenverzahnung des Sonnenrads 16, das in Außenverzahnungen der Planetenräder 18 greift, werden die Planetenräder 18 ebenfalls in Rotation versetzt. Da die Außenverzahnungen der Planetenräder 18 zudem in die Innenverzahnung des am Gehäuse 4 befestigten Hohlrads 20 greifen, ergibt sich, dass auch der Haupt-Planetenträger 22 und somit die damit verbundene Welle 10 in Rotation versetzt werden. Demnach wird die Welle 10, die hier keine direkte Verbindung zu dem Rotor 8 aufweist und somit von diesem getrennt ist, bei der hier vorgestellten Ausführungsform der elektrischen Maschine 2 von dem sich drehenden Rotor 8 über die genannten Komponenten des Planetengetriebes 14 indirekt angetrieben und somit gedreht, wobei der Rotor 8 und die Welle 10 bedingt durch die Rotorlager 28 und abhängig von einem Untersetzungsverhältnis des Planetengetriebes 18 unterschiedliche Drehzahlen aufweisen.

## Patentansprüche

1. Elektrische Maschine, die ein Gehäuse (4), einen Stator (6), einen Rotor (8), ein Planetengetriebe (14) und eine Welle (10) aufweist, wobei der Stator (6), der Rotor (8), das Planetengetriebe (14) und die Welle (10) in dem Gehäuse (4) angeordnet sind und wobei der Rotor (8) und die Welle (10) über das Planetengetriebe (14) miteinander verbunden sind, wobei das Planetengetriebe (14) ein Sonnenrad (16) mit einer Außenverzahnung, mehrere Planetenräder (18) mit jeweils einer Außenverzahnung, ein Hohlrad (20) mit einer Innenverzahnung sowie einen Haupt-Planetenträger (22) aufweist, wobei der Rotor (8) und das Sonnenrad (16) miteinander verbunden sind, wobei das Hohlrad (20) an dem Gehäuse (4) befestigt ist, wobei jeweils ein Planetenrad (18) über eine Planetenradwelle (26) an dem Haupt-Planetenträger (22) drehbar befestigt ist, wobei der Haupt-Planetenträger (22) mit der Welle (10) verbunden ist, und wobei Außenverzahnungen der Planetenräder (18) in die Außenverzahnung des Sonnenrads (16) und in die Innenverzahnung des Hohlrads (20) greifen,
**dadurch gekennzeichnet,**
**dass** ein erstes Ende jeweils einer Planetenradwelle (26) an dem Haupt-Planetenträger (22) und ein entgegengesetztes zweites Ende der jeweiligen Planetenradwelle (26) an einem zusätzlichen, zu dem Haupt-Planetenträger (22) komplementären Neben-Planetenträger (23) befestigt ist, wobei das jeweils eine Planetenrad (18) zwischen dem Haupt-Planetenträger (22) und dem Neben-Planetenträger (23) um die jeweilige Planetenradwelle (26) drehbar angeordnet ist.

2. Elektrische Maschine nach Anspruch 1, die als Elektromotor zu verwenden ist, wobei die Welle (10) als Abtriebswelle zu verwenden ist.

3. Elektrische Maschine nach Anspruch 1 oder 2, die als Generator zu verwenden ist, wobei die Welle (10) als Antriebswelle zu verwenden ist.

## Claims

1. Electric machine comprising a housing (4), a stator (6), a rotor (8), a planetary gear (14) and a shaft (10), wherein the stator (6), the rotor (8), the planetary gear (14) and the shaft (10) are arranged in the housing (4) and wherein the rotor (8) and the shaft (10) are connected to one another via the planetary gear (14), wherein the planetary gear (14) comprises a sun wheel (16) with external teeth, a plurality of planet wheels (18) each having external teeth, a ring gear (20) with internal teeth as well as a primary planet carrier (22), wherein the rotor (8) and the sun wheel (16) are connected to one another, wherein the ring gear (20) is secured to the housing (4), wherein each one of the planet wheels (18) is rotatably secured to the primary planet carrier (22) via a pinion shaft (26), wherein the primary planet carrier (22) is connected to the shaft (10), and wherein external teeth of the planet wheels (18) engage in the external teeth of the sun wheel (16) and in the internal teeth of the ring gear (20),
**characterised in that** a first end of the pinion shaft (26) in each case is secured to the primary planet carrier (22) and an opposite second end of the respective pinion shaft (26) is secured to an additional secondary planet carrier (23) complementary to the primary planet carrier (22), wherein each one of the planet wheels (18) is rotatably arranged between the primary planet carrier (22) and the secondary planet carrier (23) about the respective pinion shaft (26).

2. Electric machine according to claim 1, which is to be used as an electric motor, wherein the shaft (10) is to be used as an output shaft.

3. Electric machine according to claim 1 or claim 2, which is to be used as a generator, wherein the shaft (10) is to be used as a drive shaft.

## Revendications

1. Machine électrique, qui comporte un carter (4), un stator (6), un rotor (8), un engrenage planétaire (14) et un arbre (10), dans laquelle le stator (6), le rotor (8), l'engrenage planétaire (14) et l'arbre (10) sont agencés dans le carter (4) et dans laquelle le rotor (8) et l'arbre (10) sont reliés ensemble par l'intermédiaire de l'engrenage planétaire (14), dans laquelle l'engrenage planétaire (14) comporte une roue solaire (16) avec une denture extérieure, plusieurs roues planétaires (18) avec chacune une denture extérieure, une roue à denture intérieure (20) avec une denture intérieure ainsi qu'une cage de transmission planétaire principale (22), dans laquelle le rotor (8) et la roue solaire (16) sont reliés ensemble, dans laquelle la roue à denture intérieure (20) est fixée au carter (4), dans laquelle à chaque fois une roue planétaire (18) est fixée de manière à pouvoir tourner au niveau de la cage de transmission planétaire principale (22) par l'intermédiaire d'un arbre de roue planétaire (26), dans laquelle la cage de transmission planétaire principale (22) est reliée à l'arbre (10) et dans laquelle des dentures extérieures des roues planétaires (18) s'engrènent dans la denture extérieure de la roue solaire (16) et dans la denture intérieure de la roue à denture intérieure (20),
**caractérisée en ce qu'**une première extrémité de chaque arbre de roue planétaire (26) est fixée à la cage de transmission planétaire principale (22) et une deuxième extrémité opposée de l'arbre de roue planétaire (26) respectif est fixée à une cage de transmission planétaire auxiliaire (23) supplémentaire, complémentaire de la cage de transmission planétaire principale (22), la roue planétaire (18) respective étant agencée entre la cage de transmission planétaire principale (22) et la cage de transmission planétaire auxiliaire (23) de manière à pouvoir tourner autour de l'arbre de roue planétaire (26) respectif.

2. Machine électrique selon la revendication 1, qui doit être utilisée comme moteur électrique, l'arbre (10) devant être utilisé comme arbre de sortie.

3. Machine électrique selon la revendication 1 ou 2, qui doit être utilisée comme générateur, l'arbre (10) devant être utilisé comme arbre moteur.
